# FASCICULE DE BREVET EUROPEEN

(11) **EP 2 114 712 B1**
(45) Date de publication et mention de la délivrance du brevet: **12.01.2011**
(21) Numéro de dépôt: 08762018.3
(22) Date de dépôt: 31.01.2008
(51) Int. Cl.: B60J 7/16, B60J 7/12, B60J 7/20

(54) **TOIT PIVOTANT POUR VEHICULE AUTOMOBILE DE TYPE CABRIOLET**
SCHWENKDACH FÜR EIN UMWANDELBARES MOTORFAHRZEUG
PIVOTING ROOF FOR A CONVERTIBLE MOTOR VEHICLE

(30) Priorité: 01.02.2007 FR 0753005
(43) Date de publication de la demande: 11.11.2009
(73) Titulaire: Renault SAS, 92100 Boulogne Billancourt (FR)
(72) Inventeur: FENAL, François, F-92130 Issy Les Moulineaux (FR)
(86) Numéro de dépôt international: PCT/FR2008/050158
(87) Numéro de publication internationale: WO 2008/107618

(56) Documents cités:
- EP-A1- 0 965 711
- EP-A1- 1 338 453
- EP-A2- 1 234 704
- WO-A-2006/053876
- DE-A1-102004 019 915
- DE-A1-102004 047 872

## Description

L'invention concerne un toit pivotant pour véhicule automobile, comprenant un toit qui est monté tournant autour d'un axe horizontal sur un châssis du véhicule, le toit pouvant pivoter autour de son axe horizontal entre une position fermée dans laquelle il est sensiblement horizontal et une position ouverte dans laquelle il repose sur un coffre arrière du véhicule automobile.

On connaît déjà (WO 2006/053876) un toit ouvrant de ce type. Toutefois, ce système de toit demande des tolérances géométriques serrées sur la caisse qui le supporte. La tolérance demandée sur la caisse est de plus ou moins 1 mm. Une telle tolérance ne peut pas être tenue sans un ferrage de reprise, c'est-à-dire une opération de réglage manuelle. On utilise pour cela un outillage de réglage qui permet de mettre en place une platine vissée qui recevra ensuite le toit. C'est une opération longue qui nécessite un outillage et du temps de manutention. Cette opération est admissible sur de petites séries, par exemple inférieures à 500 véhicules par an. En revanche, elle n'est pas acceptable sur des séries importantes.

De plus, la tolérance sur la caisse doit être tenue durant la vie du véhicule. Cela impose que la caisse de la voiture ne se déforme pas sous contrainte dans les conditions suivantes :
- au cours du montage du véhicule, lorsque des éléments ajoutés après montage et réglage du toit ;
- au cours de l'utilisation du véhicule, par exemple lorsqu'une roue du véhicule est garée sur un trottoir, la caisse étant en torsion ;
- au cours du vieillissement du véhicule pendant lequel se produit un affaissement de la caisse.

Toutes ces conditions imposent des déformations de la caisse qui peuvent induire des défauts d'étanchéité et de verrouillage du toit.

La présente invention a pour objet un toit pivotant pour véhicule automobile qui remédie à ces inconvénients.

Ces buts sont atteints, conformément à la présente invention, par le fait que le toit est monté sur le châssis du véhicule automobile par l'intermédiaire de fixations souples constituées par des silent blocs.

Grâce à cette caractéristique, on permet une déformation de l'axe de rotation du toit, ce qui augmente la tolérance minimale sur la caisse. Celle-ci atteint par exemple plus ou moins 5 mm.

Avantageusement, la traverse supérieure de baie comporte un cône de centrage et le toit ouvrant comportant un cône de centrage complémentaire du cône de centrage de la traverse supérieure de baie pour assurer un guidage du toit lors de sa fermeture.

De préférence, le cône de centrage de la traverse supérieure de baie est un cône femelle et le cône de centrage du toit ouvrant est un cône mâle complémentaire qui pénètre dans le cône femelle pour assurer un guidage du toit lors de sa fermeture.

D'autres caractéristiques et avantages de l'invention apparaîtront encore à la lecture de la description qui suit d'un exemple de réalisation donné à titre illustratif en référence aux figures annexées. Sur ces figures :
- la figure 1 est une vue de principe d'un toit ouvrant par pivotement ;
- la figure 2 est une vue d'un mécanisme d'ouverture du toit de l'art antérieur ;
- la figure 3 est une vue schématique d'un mécanisme de toit conforme à la présente invention ;
- la figure 4 est une vue similaire à la figure 3 montrant le toit en position entrouverte.

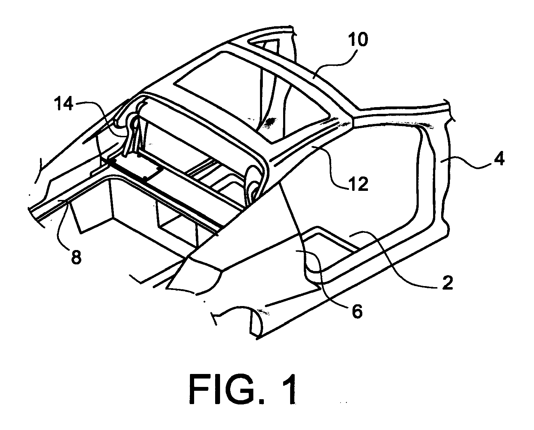

On a représenté sur la figure 1 une vue de principe d'un toit ouvrant par pivotement. La référence générale 2 désigne la caisse du véhicule. Elle comporte un pied avant 4 et un pied arrière 6 ainsi qu'un coffre 8. Les pieds avant 4 sont reliés par une traverse supérieure de baie ou traverse de pare-brise 10. Un toit 12 est monté pivotant autour d'un axe horizontal 14. Le toit 12 pivote entre une position dans laquelle il repose sur la traverse supérieure de baie ou traverse de pare-brise 10 et une position dans laquelle, après une rotation d'environ 180°, il vient se poser sur la porte de coffre 8 du véhicule.

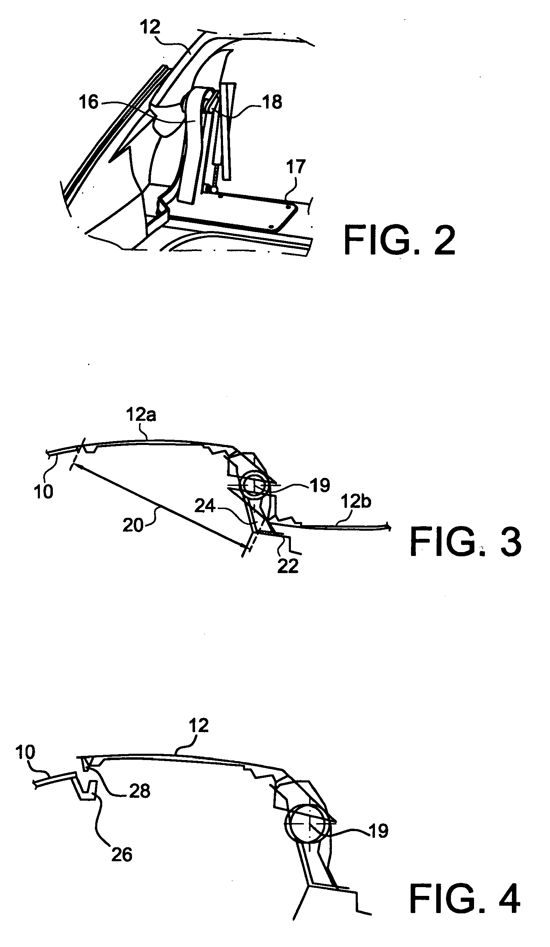

On a représenté sur la figure 2 une vue d'un mécanisme d'ouverture du toit. Le support de fixation 16 qui permet la rotation du toit est fixé sur la caisse par vissage. Le montage du toit se fait en début de chaîne, bien avant de monter les éléments intérieurs, les éléments en sous caisse ainsi que les trains avant et arrière et le groupe motopropulseur.

Le toit tourne autour d'un axe rigide 18 dans un système de roulement à billes.

On a représenté sur la figure 3 une vue schématique en coupe d'un mécanisme de toit conforme à la présente invention. La référence 12a désigne le toit en position fermée et la référence 12b désigne le toit en position ouverte sur le capot arrière. Le toit est mobile en rotation autour d'un axe 19. Conformément à la présente invention, le toit 12 est monté sur le châssis du véhicule par l'intermédiaire de fixations souples. Ces fixations souples sont des « silent » blocs. La référence 20 désigne une cote géométrique à tenir. Cette cote s'étend entre la traverse supérieure de baie 10 et la platine 24 fixée sur la caisse 22. La tolérance demandée peut être de plus ou moins 1 mm, ce qui est impossible à obtenir par les procédés classiques d'assemblage de caisse. De plus, comme on l'a expliqué antérieurement, cette cote doit être obtenue durant toute la vie du véhicule et cela quelles que soient les conditions d'utilisation de ce dernier. Conformément à l'invention, l'axe 19 du toit ouvrant peut se déformer dans une mesure suffisante pour absorber les variations de la cote géométrique à tenir. Ainsi, on est certain que le toit pourra toujours se fermer, même si la caisse est légèrement déformée, par exemple parce qu'une roue est garée sur un trottoir, ce qui occasionne un vrillage de la caisse.

On a représenté sur la figure 4 une vue similaire à la figure 3 dans laquelle le toit 12 est représenté en position entrouverte. La traverse supérieure de baie 10 comporte un cône femelle 26 et le rebord du toit pivotant 12 comporte un cône mâle 28. Le cône femelle 26 assure le guidage du cône mâle 28. Les forces de guidage agissent sur l'axe de rotation 19 du toit ce qui lui permet de se désaxer lors d'un guidage de fermeture.

Grâce à la présente invention on permet donc de conserver des tolérances standards sur les points d'ancrage du toit tout en assurant une bonne étanchéité de l'ensemble.

## Revendications

1. Toit pivotant pour véhicule automobile comprenant :
- un toit (12) qui est monté tournant autour d'un axe horizontal (19) sur un châssis du véhicule, le toit (12) pouvant pivoter autour de son axe horizontal (19) entre une position fermée dans laquelle il est sensiblement horizontal et une position ouverte dans laquelle il repose sur un coffre arrière (8) du véhicule automobile, **caractérisé en ce que** le toit (12) est monté sur le châssis du véhicule par l'intermédiaire de fixations souples constituées par des silent blocs.

2. Toit ouvrant selon la revendication 1, **caractérisé en ce que** la traverse supérieure de baie (10) comporte un cône de centrage (26) et **en ce que** le toit ouvrant (12) comporte un cône de centrage (28) complémentaire du cône de centrage (26) de la traverse supérieure de baie (10) pour assurer un guidage du toit (12) lors de sa fermeture.

3. Toit ouvrant selon la revendication 2, **caractérisé en ce que** le cône de centrage (26) de la traverse supérieure de baie est un cône femelle et **en ce que** le cône de centrage du toit ouvrant est un cône mâle (28) complémentaire qui pénètre dans le cône femelle (26) pour assurer un guidage du toit (12) lors de sa fermeture.

## Claims

1. Pivoting roof for a motor vehicle, comprising:
- a roof (12) which is mounted such that it can rotate about a horizontal axis (19) on a body of the vehicle, the roof (12) being able to pivot about its horizontal axis (19) between a closed position, in which it is approximately horizontal, and an open position, in which it rests on a rear luggage compartment (8) of the motor vehicle, **characterized in that** the roof (12) is mounted on the body of the vehicle via flexible securing elements consisting of silentblocs.

2. Opening roof according to Claim 1, **characterized in that** the upper window cross member (10) has a centring cone (26) and **in that** the opening roof (12) has a centring cone (28) complementary to the centring cone (26) of the upper window cross member (10) in order to guide the roof (12) while it is being closed.

3. Opening roof according to Claim 2, **characterized in that** the centring cone (26) of the upper window cross member is a female cone and **in that** the centring cone of the opening roof is a complementary male cone (28) that enters the female cone (26) in order to guide the roof (12) while it is being closed.

## Patentansprüche

1. Schwenkdach für ein Kraftfahrzeug, umfassend:
ein Dach (12), das um eine horizontale Achse (19) an einem Chassis des Fahrzeugs drehbar angebracht ist, wobei das Dach (12) zwischen einer geschlossenen Stellung, in der es im Wesentlichen horizontal ist, und einer geöffneten Stellung, in der es auf einem Kofferraum (8) des Kraftfahrzeugs aufliegt, um seine horizontale Achse (19) drehbar ist, **dadurch gekennzeichnet, dass** das Dach (12) mittels flexibler Befestigungen, die durch Silentblöcke gebildet werden, an dem Fahrzeugchassis angebracht ist.

2. Sonnendach nach Anspruch 1, **dadurch gekennzeichnet, dass** der obere Fensteröffnungsquerträger (10) einen Zentrierkegel (26) aufweist und das Sonnendach (12) einen Zentrierkegel (28) aufweist, der zu dem Zentrierkegel (26) des oberen Fensteröffnungsquerträgers (10) komplementär ist, um eine Führung des Dachs (12) bei seinem Schließen zu gewährleisten.

3. Sonnendach nach Anspruch 2, **dadurch gekennzeichnet, dass** der Zentrierkegel (26) des oberen Fensteröffnungsquerträgers ein Aufnahmekegel ist und der Zentrierkegel des Sonnendachs ein komplementärer Steckkegel (28) ist, der in den Aufnahmekegel (26) eintritt, um eine Führung des Dachs (12) bei seinem Schließen zu gewährleisten.
